# EUROPÄISCHE PATENTSCHRIFT

(11) **EP 3 156 828 B1**
(45) Veröffentlichungstag und Bekanntmachung des Hinweises auf die Patenterteilung: **25.12.2019**
(21) Anmeldenummer: 16196027.3
(22) Anmeldetag: 26.08.2008
(51) Int. Cl.: G02B 5/00, G02B 5/20, G02B 21/08

(54) **OPERATIONSMIKROSKOP**
SURGICAL MICROSCOPE
MICROSCOPE CHIRURGICAL

(30) Priorität: 03.09.2007 DE 102007041792
(43) Veröffentlichungstag der Anmeldung: 19.04.2017
(62) Teilanmeldung aus: 08801717.3
(73) Patentinhaber: Carl Zeiss Meditec AG, 07745 Jena (DE)
(72) Erfinder: Lücke, Christian, 73447 Oberkochen (DE); Reimer, Peter, 73479 Ellwangen (DE)
(74) Vertreter: Müller & Schubert

(56) Entgegenhaltungen:
- EP-A- 0 363 762
- EP-A- 1 058 141
- DE-A1- 3 623 613
- DE-A1- 4 016 166
- DE-B1- 2 725 107
- DE-U1- 9 405 759
- US-A- 5 745 293
- US-A1- 2002 021 511

## Beschreibung

Die vorliegende Erfindung betrifft ein Operationsmikroskop.

Optische Beobachtungseinrichtungen sind auf die vielfältigsten Weisen bekannt. Optische Beobachtungseinrichtungen können beispielsweise als Mikroskope, etwa Stereomikroskope, Operationsmikroskope, oder dergleichen ausgebildet sein. Derartige optische Beobachtungseinrichtungen verfügen nicht selten über eine Beleuchtungseinrichtung. Eine solche Beleuchtungseinrichtung erzeugt in der Regel wenigstens einen Beleuchtungsstrahlengang, der zur Beleuchtung eines zu untersuchenden Objekts dient. Nicht selten wird der Beleuchtungsstrahlengang in den Beobachtungsstrahlengang eingekoppelt, was über eine dafür vorgesehene Einkoppeleinrichtung erfolgt. Hierzu kann die Einkoppeleinrichtung beispielsweise ein entsprechendes Umlenkelement, beispielsweise in Form eines Strahlteilers, aufweisen.

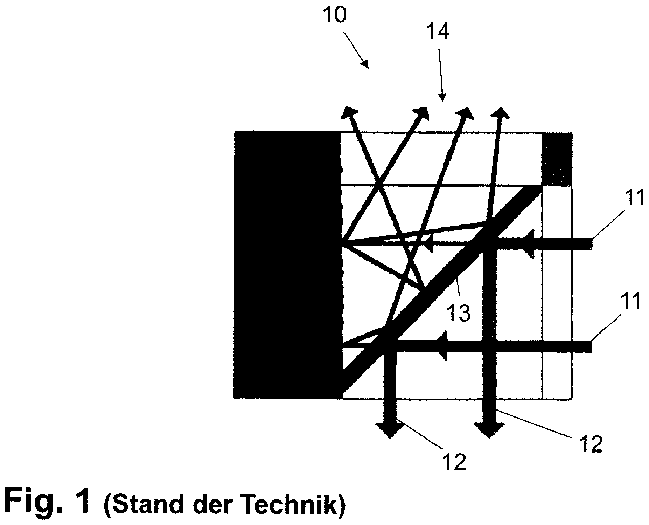

Bei der Einkopplung eines Beleuchtungsstrahlengangs in einen Beobachtungsstrahlengang tritt bei alleiniger Verwendung eines Strahlteilers das Phänomen auf, dass der Anteil des Lichts des Beleuchtungsstrahlengangs, der nicht an dem Strahlteiler reflektiert wird, unerwünschtes Streulicht erzeugt, was auch als Falschlicht bezeichnet wird. Dieses Streulicht tritt in unerwünschter Weise in den Beobachtungsstrahlengang ein, wo es beispielsweise zu einer Minderung des Bildkontrasts führen kann. Eine derartige Situation ist beispielhaft in Figur 1 angedeutet.

Um derart erzeugtes Falschlicht beseitigen zu können, sind im Stand der Technik bereits vielfältige Maßnahmen ergriffen worden.

In der DE 36 23 613 C2 beispielsweise ist eine Beleuchtungseinrichtung für ein Operationsmikroskop beschrieben. Auch dort wird ein Beleuchtungsstrahlengang über einen Strahlteiler in einen Beobachtungsstrahlengang eingekoppelt. Zur Reduzierung von Falschlicht ist gemäß dieser bekannten Lösung vorgeschlagen worden, eine Licht absorbierende Lichtfalle vorzusehen, die neben dem Strahlteiler angeordnet wird. Die Lichtfalle hat die Aufgabe, das von der Beleuchtungseinrichtung herkommende und durch den Strahlteiler hindurchtretende, nicht reflektierte Beleuchtungslicht zu absorbieren. Eine hierzu ähnliche Lösung ist auch in der EP 0 363 762 B1 beschrieben.

In der EP 1 058 141 B1 ist ein Fluoreszenzmikroskop offenbart, das ebenfalls über eine Einrichtung zur Erzeugung eines Beleuchtungsstrahls verfügt. Der Beleuchtungsstrahl wird über einen Strahlteiler umgelenkt. Dabei ist ein unerwünschter Bestandteil des Beleuchtungslichts vorhanden, der nicht vom Strahlteiler reflektiert wird, sondern durch diesen hindurchgeht. Auch bei dieser bekannten Lösung ist wiederum eine Lichtfalle vorgesehen, die in Form einer geschwärzten Rückwand ausgebildet ist. An der geschwärzten Rückwand soll der unerwünschte Teil des Beleuchtungslichts möglichst vollständig absorbiert werden.

Ferner ist aus der DE2725107 eine Lichtfalle für eine Fotosetzmaschine bekannt.

Die im Stand der Technik aufgezeigten Varianten einer Lichtfalle können jedoch nicht für alle Anwendungen eingesetzt werden. So ist es beispielsweise nicht möglich, derartige Lichtfallen für die Auflichtbeleuchtung einer Mikroskops, etwa eines Operationsmikroskops oder allgemein eines Stereomikroskops, anzuwenden. Durch den Restreflexionsgrad eingesetzter Filterelemente gelangen immer noch Lichtanteile des Beleuchtungslichts in den Beobachtungsstrahlengang, oder durch ein Objektivelement, bei dem es sich beispielsweise um das Hauptobjektiv handeln kann, unterhalb der Beleuchtungseinkopplung in den Objektraum. Aufgrund der hohen Lichtintensität stören selbst geringe Restreflexionsgrade.

Der vorliegenden Erfindung liegt die Aufgabe zugrunde, diesem Umstand Rechnung zu tragen und Lösungen bereitzustellen, mit denen die Beseitigung von störendem Falschlicht noch weiter verbessert werden kann. Insbesondere sollen Lösungen bereitgestellt werden, durch die störendes Falschlicht erst gar nicht entstehen kann, das bei der Einkopplung einer koaxialen Auflichtbeleuchtung über einen Strahlteiler typischerweise in einem Beobachtungsstrahlengang auftritt.

Diese Aufgabe wird erfindungsgemäß gelöst durch das Operationsmikroskop mit den Merkmalen gemäß dem unabhängigen Patentanspruch 1, Weitere Merkmale und Details der Erfindung ergeben sich aus den Unteransprüchen, der Beschreibung sowie den Zeichnungen. Die einzelnen Erfindungsaspekte weisen den gemeinsamen Grundgedanken auf, dass durch eine besondere Ausgestaltung der Lichtfalle erreicht werden kann, dass entstehendes Falschlicht, bei dem es sich insbesondere um unerwünschtes Streulicht handelt, das beim Durchtritt durch ein Umlenkelement, etwa einen Strahlteiler, entsteht, in besonders effizienter Weise verhindert werden kann. Die Lichtfalle dient somit insbesondere zur Vernichtung von Streulicht.

Gemäß einem Beispiel wird eine Lichtfalle zur Beseitigung von Falschlicht bereitgestellt, die ein Filterelement, insbesondere ein Neutralfilterelement, aufweist. Die Lichtfalle ist zunächst dadurch gekennzeichnet, dass die Lichteintrittsfläche des Filterelements einen hohlen Radius aufweist.

Dadurch kann entstehendes Falschlicht auf besonders wirkungsvolle Weise beseitigt, beziehungsweise die Entstehung von Falschlicht verhindert werden.

Eine derartige Lichtfalle kann in unterschiedlichsten Einrichtungen zum Einsatz kommen. Besonders vorteilhaft kann eine derartige Lichtfalle in optischen Beobachtungseinrichtungen eingesetzt werden, bei denen es sich beispielsweise um Mikroskope, beispielsweise Stereomikroskope, etwa in Form von Operationsmikroskopen für die Ophthalmochirurgie oder dergleichen, handeln kann. Natürlich ist die Erfindung nicht auf den Einsatz in den vorstehend beschriebenen Einrichtungen beschränkt.

Um das Falschlicht zu beseitigen, wird ein Filterelement eingesetzt. Bei einem solchen Filterelement kann es sich beispielsweise um einen Neutralfilter handeln. Bei einem Neutralfilter handelt es sich generell um einen Lichtfilter zur gleichmäßigen Schwächung des Lichtes, insbesondere in einem breiten Spektralbereich. Derartige Filterelemente, sowie deren Einsatz als Lichtfallen, sind im Stand der Technik bereits grundsätzlich bekannt.

Der Kern der vorliegenden Beschreibung besteht nunmehr darin, dass das Filterelement eine besondere Ausgestaltung hat, wobei diese besondere Ausgestaltung dazu führt, dass das entstehende Falschlicht wirksam beseitigt werden kann.

Es ist vorgesehen, dass das Filterelement eine Lichteintrittsfläche hat, die einen hohlen Radius aufweist. Das bedeutet, dass die Lichteintrittsfläche des Filterelements einen gekrümmten Verlauf hat. Die Lichteintrittsfläche weist somit eine nach innen in das Filterelement gerichtete Wölbung oder Vertiefung auf.

Vorteilhaft weist das Filterelement der Lichtfalle eine sphärisch gekrümmte Lichteintrittsfläche auf.

Das Licht, das aufgrund des Restreflexionsgrades der Eintrittsfläche des Filterelements reflektiert wird, wird durch den hohlen Radius kollimiert und kann dann an einen Ort gelenkt werden, wo es nicht stört. Bevorzugt ist die Krümmung so gewählt, dass der entstehende Leuchtfleck möglichst klein ist. Die Lichteintrittsfläche des Filterelements ist somit auch zur Kollimation des reflektierten Lichts ausgebildet. Wie dies im Einzelnen geschehen kann, wird im weiteren Verlauf der Beschreibung noch näher erläutert. Durch die Kollimation entsteht auch kein zusätzliches Streulicht durch andere optische oder mechanische Bauteile.

Der Wert des hohlen Radius der Lichteintrittsfläche und die sich daraus ergebende Krümmung der Lichteintrittsfläche können je nach Einsatzgebiet und Anwendungsfall für die Lichtfalle unterschiedlich sein. Insbesondere ist der Krümmungsgrad auch abhängig von den Platzverhältnissen innerhalb der Einrichtung, in der die Lichtfalle angeordnet ist, von der akzeptablen Größe des Leuchtflecks oder der Wegstrecke, die das von der Eintrittsfläche des Filterelements reflektierte Licht, das durch den hohlen Radius kollimiert wird, bis zu dem Ort, wo es nicht stört, zurücklegen kann/muss.

Es ist vorgesehen, dass der Krümmungsradius der Lichteintrittsfläche im Bereich von 25 mm bis 200 mm liegt. Bevorzugt ist vorgesehen, dass der Krümmungsradius der Lichteintrittsfläche im Bereich von 45 mm bis 110 mm liegt.

Die Ausgestaltung der Lichtfalle ermöglicht es, dass Reste von Licht, insbesondere von Beleuchtungslicht, die von der Lichtfalle reflektiert werden, an einen bestimmten Ort, beispielsweise auf eine Blende, gelenkt werden können, wobei der Ort so nahe im Bereich der Lichtfalle, insbesondere im Bereich der Lichteintrittsfläche des Filterelements der Lichtfalle, liegt, dass eine Integration der Lichtfalle auch in Bereichen mit nur geringem verfügbarem Bauraum, etwa in einer optischen Beobachtungseinrichtung, möglich ist. Weitere diesbezügliche Details sind im weiteren verlauf der Beschreibung näher erläutert.

Vorzugsweise ist vorgesehen, dass das Filterelement zumindest bereichsweise aus einem Absorptionsmaterial besteht (zum Beispiel Schott Neutralfilter NG1) oder dass zumindest die Lichteintrittsfläche zumindest bereichsweise mit einem Absorptionsmaterial versehen ist. Dies können beispielsweise bei mineralischen Gläsern aufgedampfte Schichten (zum Beispiel wie bei Zeiss-Sonnenschutzgläsern die Schicht ,Umbra'), im Tauchbad gefärbte organische Gläser (zum Beispiel Zeiss Clarlet Uni) oder dergleichen sein.

Vorteilhaft ist dabei vorgesehen, dass das Filterelement einen hohen Absorptionsgrad von größer/gleich 80% aufweist. Bei einem Absorptionsgrad von 99,9% (NG1) ist gewährleistet, dass das Licht, das die Hohlfläche des Filterelementes transmittiert, an dessen zweiter Fläche praktisch vollkommen absorbiert ist und nur noch marginal kleine Intensitäten das Filter verlassen, die nicht mehr stören. An der zweiten Fläche des Filterelementes reflektiertes Licht unterliegt noch einmal der gleichen Absorption, so dass ein Absorptionsgrad von 80% grundsätzlich ausreichend ist.

Vorzugsweise kann die Lichtfalle an oder in einer Lichtfallen-Aufnahmeeinrichtung angeordnet sein. Vorteilhaft kann die Aufnahme der Lichtfalle an/in der Lichtfallen-Aufnahmeeinrichtung derart erfolgen, dass ein guter thermischer Kontakt zwischen Lichtfalle und Lichtfallen-Aufnahmeeinrichtung besteht. Anders ausgedrückt kann vorteilhaft vorgesehen sein, dass die Lichtfalle thermisch an der Lichtfallen-Aufnahmeeinrichtung angekoppelt ist. Beispielsweise kann die Lichtfalle mit der Lichtfallen-Aufnahmeeinrichtung verklebt sein, etwa in dieser eingeklebt sein.

Eine derartige Lichtfalle kann auf unterschiedlichste Weise eingesetzt werden.

Gemäß einem zweiten Beispiel wird eine Einrichtung zum Einkoppeln eines ersten Strahlengangs in einen zweiten Strahlengang bereitgestellt, aufweisend ein Umlenkelement und eine im Bereich des Umlenkelements vorgesehene Lichtfalle, die dadurch gekennzeichnet ist, dass die Lichtfalle in der wie vorstehend beschriebenen Weise ausgebildet ist.

Dabei ist das Beispiel nicht auf bestimmte Ausführungsformen für das Umlenkelement beschränkt. Beispielsweise kann das Umlenkelement als Strahlteiler, als Strahlenteilerplatte, als teildurchlässiger Spiegel, als Strahlteilerwürfel oder dergleichen ausgebildet sein. Wenn das Umlenkelement als teildurchlässiger Spiegel ausgebildet ist, kann dieser vorteilhaft als physikalischer und/oder geometrischer Teiler ausgelegt sein.

Die Lichtfalle ist vorzugsweise im Bereich des Umlenkelements vorgesehen, so dass die Lichtfalle - in Strahlrichtung - nach dem Umlenkelement angeordnet ist.

Vorzugsweise kann die Lichtfalle in wenigstens einer Ebene, vorzugsweise in zwei Ebenen, gekippt sein. Üblicherweise sind die Bauteile Umlenkelement und Lichtfalle entlang einer Achse angeordnet, bei der es sich um die optische Achse handeln kann. Die Kippung der Lichtfalle kann dann in Bezug auf diese Achse vorgenommen werden. Im einfachsten Fall kann vorgesehen sein, dass die Lichtfalle in wenigstens einer Ebene gekippt ist. Vorzugsweise ist jedoch vorgesehen, dass die Lichtfalle in zwei Ebenen gekippt ist. Die Kippung erfolgt vorzugsweise im Scheitelpunkt der hohlen Eintrittsfläche des Filterelements, und zwar um die tangentiale und/oder sagittale Ebene. Die Lichteintrittsfläche des Filterelements der Lichtfalle weist die weiter oben beschriebene Krümmung auf. Vorteilhaft kann die Lichteintrittsfläche sphärisch gekrümmt sein. Licht trifft auf die Oberfläche der Lichteintrittsfläche auf und wird von dort zum Teil reflektiert. Vorteilhaft kann die Lichtfalle in der X/Z-Ebene, das heißt nach oben oder unten, gekippt sein. Die Kippung erfolgt dann in einem bestimmten Winkel in Bezug auf die optische Achse des auf die Lichteintrittsfläche des Filterelements auftreffenden Lichts. Die Oberflächennormale im Auftreffpunkt ist in Bezug auf die optische Achse dann um einen bestimmten Winkel nach oben oder unten gekippt. Eine andere Kippung kann in ähnlicher Weise in der X/Y-Richtung erfolgen, was dann einer Kippung nach links oder rechts entspricht.

In einer solchen Ausgestaltung wird das Licht, das aufgrund des Restreflexionsgrades der Eintrittsfläche der Lichtfalle reflektiert wird, durch den hohlen Radius des Filterelements kollimiert und über die Kippung der Lichtfalle - vorzugsweise in zwei Ebenen - an einen geeigneten Ort gelenkt wird, wo es nicht stört. Bei einem solchen Ort kann es sich beispielsweise um einen Ort innerhalb eines Gehäuses oder dergleichen handeln.

Vorteilhaft kann das Filterelement der Lichtfalle derart ausgebildet oder angeordnet sein, dass von der Lichteintrittsfläche des Filterelements zurückreflektierte Lichtstrahlen an dem Umlenkelement vorbeilaufen. Auf diese Weise kann verhindert werden, dass von der Lichtfalle reflektiertes Licht wieder durch das Umlenkelement hindurchtreten kann. Durch die vorteilhafte Ausgestaltung wird erreicht, dass das Umlenkelement lediglich einfach von Beleuchtungslicht durchsetzt wird. Licht, das von der Lichtfalle zurückreflektiert wird, wird so reflektiert, dass es nicht mehr das Umlenkelement durchsetzt.

In weiterer Ausgestaltung kann die Einkoppeleinrichtung ein flächiges Element zum Auffokussieren des von der Lichteintrittsfläche des Filterelements reflektierten Lichts aufweisen. Das flächige Element kann auf unterschiedliche Weise ausgebildet sein. Beispielsweise kann es sich hierbei um eine Blende, vorteilhaft eine Metallblende, handeln, die bevorzugt in Form einer schwarzen Blende ausgebildet ist. Dieses flächige Element ist der Lichtfalle zugeordnet. Beleuchtungslicht, welches durch das Umlenkelement zur Lichtfalle gelangt, wird, soweit es von der Lichtfalle nicht absorbiert wird, zu dem flächigen Element gelenkt.

Die Lichtfalle weist ein wie weiter oben beschriebenes Filterelement mit einer gekrümmten Lichteintrittsfläche auf. Die Lichteintrittsfläche kann vorteilhaft sphärisch gekrümmt sein. Vorteilhaft ist vorgesehen, dass der Abstand zwischen dem Filterelement der Lichtfalle und dem flächigen Element, beispielsweise einer Blende, so gewählt ist, dass der Fokuspunkt des von der Lichteintrittsfläche des Filterelements reflektierten Lichts auf dem flächigen Element liegt. Dies hängt zum einen vom Krümmungsradius der Lichteintrittsfläche des Filterelements, und zum anderen vom Abstand des Filterelements vom flächigen Element, insbesondere vom Abstand des Fokuspunktes zur Oberfläche des Filterelements, ab. Dabei ist insbesondere derjenige Punkt auf der Oberfläche der Lichteintrittsfläche des Filterelements von Bedeutung, an/in dem das Licht auf die Lichteintrittsfläche des Filterelements auftrifft. Anders ausgedrückt handelt es sich um denjenigen Ort, an dem die optische Achse des auf die Lichteintrittsfläche der Lichtfalle auftreffenden Lichts die Oberfläche der Lichteintrittsfläche der Lichtfalle durchsetzt.

Vorteilhaft beträgt bei einem Krümmungsradius r der Abstand zwischen dem Fokuspunkt, der vorzugsweise auf dem flächigen Element liegt, und dem Punkt auf der Oberfläche der Lichteintrittsfläche des Filterelements, an/in dem das Licht auf die Lichteintrittsfläche des Filterelements auftrifft, r/2. Je steiler die Krümmung der Lichtfalle ist, desto näher befindet sich der Fokuspunkt an der Lichtfalle, desto geringer ist folglich der Abstand zwischen dem Fokuspunkt und der Lichtfalle. Auf diese Weise kann der benötigte Bauraum vorteilhaft reduziert werden

Vorteilhaft ist in einem solchen Fall die Form der Oberfläche des Filterelements der Lichtfalle, das heißt deren Krümmung, so gewählt, dass Beleuchtungslicht, das auf die Lichtfalle trifft, nur zu dem flächigen Element, beispielsweise der Blende, reflektiert wird.

Vorzugsweise kann die Einkoppeleinrichtung als Einrichtung zum Einkoppeln eines Beleuchtungsstrahlengangs in einen Beobachtungsstrahlengang, insbesondere zum Einkoppeln einer koaxialen Auflichtbeleuchtung in einen Beobachtungsstrahlengang, ausgebildet sein.

Gemäß eines weiteren Beispiels wird eine Beleuchtungseinrichtung für eine optische Beobachtungseinrichtung, insbesondere für ein Mikroskop, bereitgestellt, mit einer Einrichtung zum Erzeugen wenigstens eines Beleuchtungsstrahlengangs und mit einer Einrichtung zum Einkoppeln wenigstens eines Beleuchtungsstrahlengangs in wenigstens einen Beobachtungsstrahlengang.

Die Beleuchtungseinrichtung ist dadurch gekennzeichnet, dass die Einkoppeleinrichtung zum Einkoppeln eines ersten Strahlengangs in einen zweiten Strahlengang ausgebildet ist, dass die Einkoppeleinrichtung ein Umlenkelement und eine im Bereich des Umlenkelements vorgesehene Lichtfalle aufweist, dass Lichtfalle ein Filterelement, insbesondere ein Neutralfilterelement, aufweist und dass die Lichteintrittsfläche des Filterelements einen hohlen Radius aufweist.

Die Beleuchtungseinrichtung ist vorteilhaft dadurch gekennzeichnet, dass die Einkoppeleinrichtung in der wie vorstehend beschriebenen erfindungsgemäßen Weise ausgebildet ist.

Bei einer derartigen Ausführungsform stellt die Einkoppeleinrichtung einen Bestandteil der Beleuchtungseinrichtung dar.

Vorteilhaft kann die Beleuchtungseinrichtung zur Erzeugung einer koaxialen Auflichtbeleuchtung ausgebildet sein.

Die wie vorstehend beschriebene erfindungsgemäße Lichtfalle, die wie vorstehend beschriebene Einkoppeleinrichtung oder die wie vorstehend beschriebene Beleuchtungseinrichtung sind vorteilhaft Bestandteil einer optischen Beobachtungseinrichtung.

Gemäß der Erfindung wird ein Mikroskop, bereitgestellt, mit einem Grundkörper, und mit einer Beleuchtungseinrichtung, welche wenigstens einen Beleuchtungsstrahlengang zu einem Umlenkelement bereitstellt, das das Beleuchtungslicht durch ein Objektivelement zu einer Objektebene lenkt. Erfindungsgemäß ist das Mikroskop mit den Merkmalen des Anspruchs 1 ausgebildet.

Ein solches Operationsmikroskop mit einem Grundkörper enthält ein Beleuchtungssystem, welches einen Beleuchtungsstrahlengang zu einem Umlenkelement, etwa einem Strahlteiler, bereitstellt, das das Beleuchtungslicht durch das Objektivelement, beispielsweise das Mikroskop-Hauptobjektiv, zum Objektbereich lenkt. Das Umlenkelement wird von wenigstens einem Beobachtungsstrahlengang des Operationsmikroskops durchsetzt. Das Beleuchtungslicht, welches von dem Umlenkelement nicht zum Objektbereich gelenkt wird, gelangt zu der Lichtfalle.

Bei dem Operationsmikroskop handelt es sich vorteilhaft um Operationsmikroskop für die Ophthalmochirurgie, oder allgemeiner ein Stereomikroskop, oder dergleichen.

Die Beleuchtungseinrichtung kann vorteilhaft zur Erzeugung einer koaxialen Auflichtbeleuchtung ausgebildet sein.

Vorzugsweise kann auch die Einkoppeleinrichtung zum Einkoppeln einer koaxialen Auflichtbeleuchtung in wenigstens einen Beobachtungsstrahlengang ausgebildet sein.

Die optische Beobachtungseinrichtung weist vorteilhaft ein Objektivelement auf, bei dem es sich beispielsweise um das Hauptobjektiv handeln kann. Vorzugsweise kann die Einkoppeleinrichtung oberhalb des Objektivelements vorgesehen sein. Natürlich kann die optische Beobachtungseinrichtung auch noch über weitere optische Elemente verfügen, wie wenigstens einen Tubus, wenigstens ein Okular, oder dergleichen.

Vorzugsweise kann die Lichtfalle der Einkoppeleinrichtung der Beleuchtungseinrichtung thermisch am Grundkörper der optischen Beobachtungseinrichtung angekoppelt sein. Die Lichtfalle kann beispielsweise in einer Lichtfallen-Aufnahmeeinrichtung angeordnet sein und steht dann mit dieser in gutem thermischem Kontakt. Die Lichtfalle, beispielsweise über die Lichtfallen-Aufnahmeeinrichtung, ist wiederum - beispielsweise über Befestigungsschraubenfest mit dem Grundkörper der optischen Beobachtungseinrichtung verbunden. Diese Maßnahme bewirkt, dass die Lichtfalle thermisch an den Grundkörper der optischen Beobachtungseinrichtung angekoppelt ist. Die Wärme, welche von dem auf die Lichtfalle auftreffenden Beleuchtungslicht hervorgerufen wird, kann auf diese Weise gut in den Grundkörper der optischen Beobachtungseinrichtung abgeführt werden.

In weiterer Ausgestaltung kann das flächige Element der Einkoppeleinrichtung im Bereich des Objektivelements der optischen Beobachtungseinrichtung vorgesehen sein. Das Beleuchtungslicht, welches durch das Umlenkelement zur Lichtfalle gelangt, wird, soweit es von der Lichtfalle nicht absorbiert wird, zu dem flächigen Element, beispielsweise einer Metallblende, gelenkt. Vorteilhaft kann vorgesehen sein, dass das flächige Element das Objektivelement teilweise abdeckt. Auf diese Weise wird vermieden, dass am Objektivelement aufgrund von Licht, das von der Lichtfalle reflektiert wird, störende Reflexe auftreten.

Vorteilhafte Merkmale der vorliegenden Erfindung sind die folgenden:
1) Eine hohe Krümmung der Lichtfalle. Diese Maßnahme ermöglicht, dass in dem knappen, in der optischen Beobachtungseinrichtung, etwa im Operationsmikroskop, verfügbaren Bauraum das Beleuchtungslicht, welches von der Lichtfalle reflektiert wird, sämtlich auf das flächige Element, beispielsweise die schwarze Metallblende, gelangt, das heißt auf einen relativ kleinen Raum fokussiert wird.
2) Fokussieren des mittels der Lichtfalle reflektierten Beleuchtungslichts auf eine Fläche, beispielsweise in Form einer schwarzen Metallblende, die vorzugsweise oberhalb des Mikroskop -Hauptobjektivs angeordnet ist und die beispielsweise das Mikroskop -Hauptobjektiv teilweise abdeckt.
3) Aufnahme der Lichtfalle in eine Lichtfallen-Halterung derart, dass ein guter thermischer Kontakt zwischen Lichtfalle und Lichtfallen-Halterung besteht, wobei die Lichtfallen-Halterung wiederum für gute Wärmeleitung mit dem Grundkörper der optischen Beobachtungseinrichtung verbunden ist.

Die Erfindung wird nun anhand von Ausführungsbeispielen unter Bezugnahme auf die beiliegenden Zeichnungen näher erläutert. Es zeigen
- Figur 1: in schematischer Darstellung eine herkömmliche Einkoppeleinrichtung nach dem Stand der Technik ohne Lichtfalle;
- Figur 2: in schematischer Darstellung eine herkömmliche Einkoppelvorrichtung nach dem Stand der Technik mit Lichtfalle;
- Figur 3: in schematischer Darstellung ein erstes Ausführungsbeispiel eines erfindungsgemäßen Operationsmikroskops mit Lichtfalle;
- Figur 4: in schematischer Darstellung ein zweites Ausführungsbeispiel eines erfindungsgemäßen Operationsmikroskops mit Lichtfalle;
- Figur 5: in schematischer Darstellung ein drittes Ausführungsbeispiel eines erfindungsgemäßen Operationsmikroskops mit Lichtfalle
- Figur 6: in schematischer Darstellung ein viertes Ausführungsbeispiel eines erfindungsgemäßen Operationsmikroskops mit Lichtfalle;
- Figur 7: eine Draufsicht auf einen Abschnitt eines Operationsmikroskops, in dem das vierte Ausführungsbeispiel gemäß Figur 6 implementiert ist;
- Figur 8: eine perspektivische Ansicht des in Figur 7 dargestellten Abschnitts eines Operationsmikroskops;
- Figur 9: eine perspektivische Ansicht des in Figur 8 dargestellten Abschnitts eines Operationsmikroskops ohne Gehäuse;
- Figur 10: eine perspektivische Ansicht des in Figur 7 dargestellten Abschnitts eines Operationsmikroskops mit einem Pankraten; und
- Figur 11: eine Draufsicht auf einen Abschnitt eines Operationsmikroskops gemäß Figur 7, bei dem das Umlenkelement von Beobachtungsstrahlengängen durchsetzt ist.

In der Figur 1 ist schematisch eine herkömmliche Einkoppeleinrichtung 10 dargestellt, wie sie im Stand der Technik bekannt ist. Mit der Einkoppeleinrichtung 10, die ein Umlenkelement 13, beispielsweise einen Strahlteiler, aufweist, soll ein erster Strahlengang 11, beispielsweise ein Beleuchtungsstrahlengang, in einen zweiten Strahlengang 12, beispielsweise einen Beobachtungsstrahlengang, eingekoppelt werden. Dabei wird der größere Bestandteil des ersten Strahlengangs 11 am Umlenkelement 13 nicht reflektiert, sondern tritt durch dieses hindurch. Da die Einkoppelvorrichtung 10 gemäß Figur 1 nicht über eine Lichtfalle verfügt, entsteht Streulicht 14 (Falschlicht), das in unerwünschter Weise in den zweiten Strahlengang 12 gelangt und dort beispielsweise zu einer Minderung des Bildkontrastes führt.

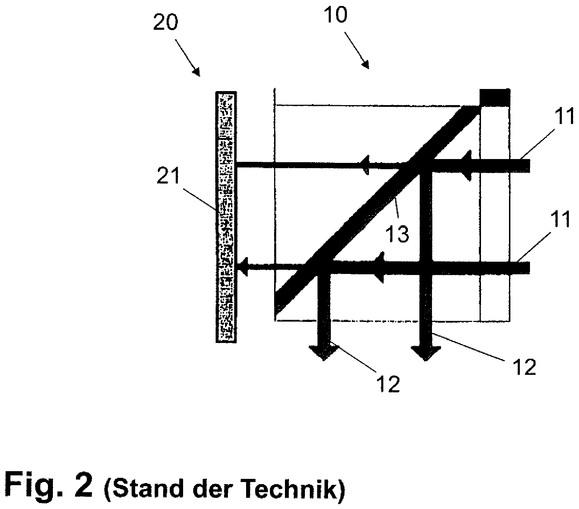

Um das Entstehen von Falschlicht zu reduzieren, ist es im Stand der Technik bereits bekannt gewesen, Lichtfallen einzusetzen. Eine in diesem Sinne bekannte Lösung ist in Figur 2 dargestellt. Die in Figur 2 dargestellte Einkoppeleinrichtung 10 entspricht von ihrem Grundaufbau her der in Figur 1 dargestellten Einkoppeleinrichtung. Hinter dem Umlenkelement 13 ist diesmal allerdings eine Lichtfalle 20 in Form eines Neutralfilters vorgesehen. Durch diesen Neutralfilter 20 kann das durch das Umlenkelement 13 hindurchtretende Falschlicht zumindest teilweise absorbiert werden.

Die in Figur 2 dargestellte Variante einer Lichtfalle 20 kann jedoch nicht für alle Anwendungen eingesetzt werden. So ist es beispielsweise nicht möglich, derartige Lichtfallen für die Auflichtbeleuchtung einer Mikroskops, etwa eines Operationsmikroskops oder allgemein eines Stereomikroskops, anzuwenden. Durch den Restreflexionsgrad eingesetzter Filterelemente gelangen immer noch Lichtanteile des ersten Strahlengangs 11 in den Strahlengang 12. Aufgrund der hohen Lichtintensität stören selbst geringe Restreflexionsgrade.

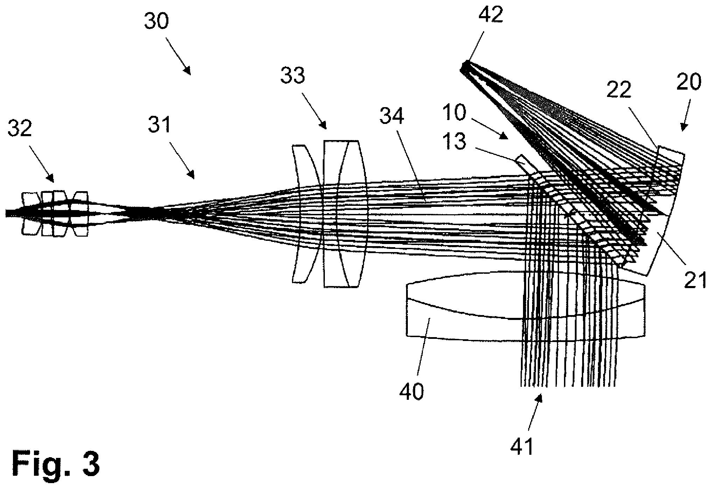

Um diese Nachteile zum umgehen, wird gemäß der vorliegenden Erfindung eine Lichtfalle 20 bereitgestellt, wie sie sich aus den Figuren 3 bis 6 ergibt.

In den Figuren 3 bis 6 ist jeweils eine Beleuchtungseinrichtung 30 für eine optische Beobachtungseinrichtung dargestellt, bei der es sich beispielsweise um ein Operationsmikroskop - etwa für die Ophthalmochirurgie -, generell ein Stereomikroskop oder dergleichen handeln kann. Wie insbesondere aus den Figuren 3, 5 und 6 ersichtlich ist, weist die optische Beobachtungseinrichtung ein Objektivelement 40 auf. In der optischen Beobachtungseinrichtung wird wenigstens ein Beobachtungsstrahlengang 41 erzeugt.

Die Beleuchtungseinrichtung 30 ist zur Erzeugung einer koaxialen Auflichtbeleuchtung ausgebildet. Die Beleuchtungseinrichtung 30 weist eine Einrichtung 31 zum Erzeugen wenigstens eines Beleuchtungsstrahlengangs 34 auf. Dazu kann die Beleuchtungseinrichtung 30 über eine Reihe von optischen Elementen 32, 33 verfügen.

Über eine Einkoppeleinrichtung 10, die in den Ausführungsbeispielen Bestandteil der Beleuchtungseinrichtung 30 ist, wird der Beleuchtungsstrahlengang 34 in Form einer koaxialen Auflichtbeleuchtung in den Beobachtungsstrahlengang 41 eingekoppelt. Dazu ist zunächst ein Umlenkelement 13, beispielsweise ein Strahlteiler, vorgesehen, das beispielsweise als Strahlteilerplatte, als teillichtdurchlässiger Spiegel, als Strahlteilerwürfel oder dergleichen ausgebildet sein kann.

Neben dem Umlenkelement 13, in den dargestellten Beispielen gemäß Figuren 3 bis 6 in Strahlrichtung nach beziehungsweise hinter dem Umlenkelement 13, ist eine in besonderer Weise ausgebildete Lichtfalle 20 vorgesehen.

Die Lichtfalle 20 weist ein Filterelement 21 mit hohem Absorptionsgrad von größer 80%, in den dargestellten Beispielen ein Neutralfilterelement, auf, dessen Lichteintrittsfläche 22 einen hohlen Radius aufweist. Der Krümmungsradius der hohlen Eintrittsfläche 22 der Lichtfalle 20 liegt vorteilhaft zwischen 25 mm und 200 mm, bevorzugt zwischen 45 mm und 110 mm. Das Licht, das aufgrund des Restreflexionsgrades der Eintrittsfläche 22 des Filterelements 21 reflektiert wird, wird durch den hohlen Radius der Lichteintrittsfläche 22 kollimiert und über eine Kippung des Filterelements 21, vorzugsweise in zwei Ebenen, an einen geeigneten Ort 42, beispielsweise innerhalb des Gehäuses der optischen Beobachtungseinrichtung gelenkt, wo es nicht stört. Dies ist in den Figuren 3, 5 und 6 dargestellt. Durch die Kollimation entsteht auch kein zusätzliches Streulicht durch andere optische oder mechanische Bauteile.

Bei dem in Figur 3 dargestellten Ausführungsbeispiel wird der reflektierte Strahl an einen geeigneten Punkt 42 nach oben gelenkt. Vorteilhaft wird die Krümmung der Eintrittsfläche 22 der Lichtfalle 20 so gewählt, dass der Leuchtfleck am Ort 42 möglichst klein ist. Dies wird von einer Reihe von Faktoren beeinflusst, insbesondere auch von der Wegstrecke, die das Licht von der Eintrittsfläche 22 bis zu dem entsprechenden Ort 42 zurücklegen kann/muss. Bei dem in Figur 3 dargestellten Beispiel ist dieser Weg relativ lang, so dass die Eintrittsfläche 22 in dem in Figur 3 gezeigten Beispiel einen relativ langen Krümmungsradius aufweist.

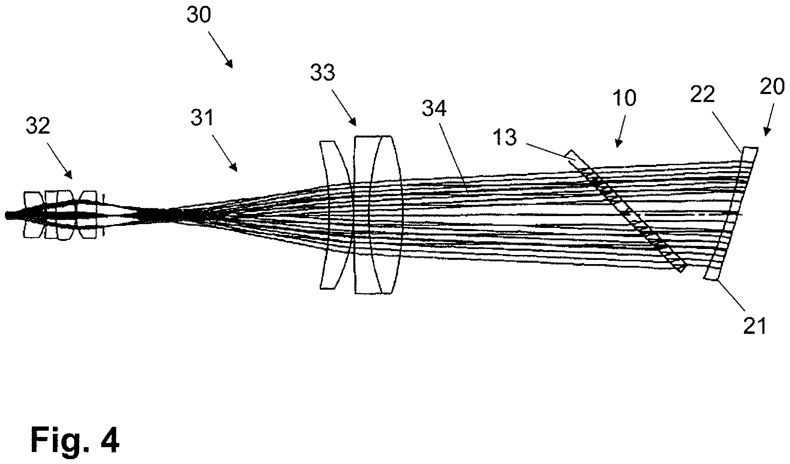

Das Licht, das in das Filterelement 21 eintritt, kann durch dieses auch vollständig absorbiert werden. Ein solches Beispiel ist in Figur 4 dargestellt.

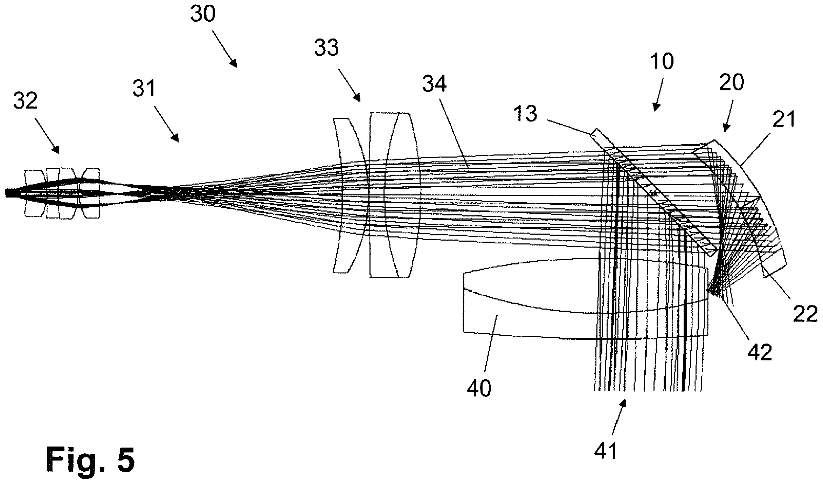

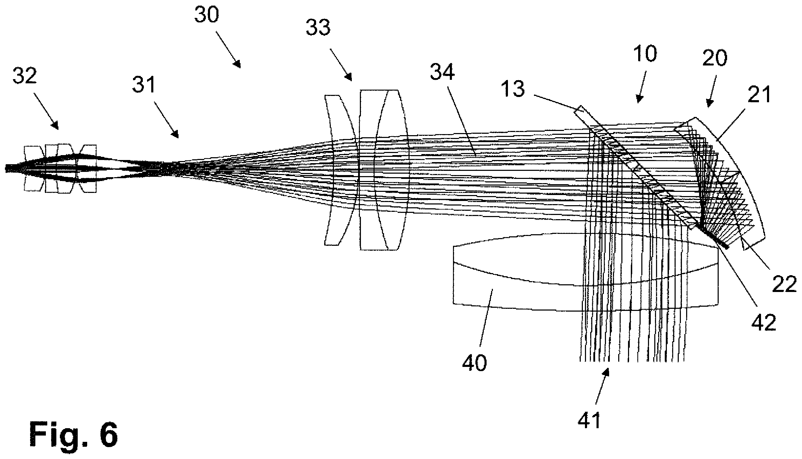

Bei den in den Figuren 5 und 6 dargestellten Beispielen wird der reflektierte Strahl an einen geeigneten Ort 42 nach unten abgelenkt. Bei den beiden Beispielen ist die Wegstrecke, die der Lichtstrahl zurücklegt, kürzer als bei dem in Figur 3 dargestellten Beispiel, so dass die Eintrittsfläche 22 in den in den Figuren 5 und 6 dargestellten Beispielen im Vergleich zur Figur 3 einen kürzeren Krümmungsradius aufweist.

In dem in Figur 5 dargestellten Beispiel befindet sich der Ort 42 weiter vom Strahlteiler 13 entfernt. Bei diesem Beispiel liegt der Ort 42 in größerer Nähe zum Objektivelement 40.

Bei dem in Figur 6 dargestellten Beispiel befindet sich der Ort 42, zu dem der Lichtstrahl gelenkt wird, in unmittelbarer Nähe zum Umlenkelement 13, beispielsweise direkt neben dem Umlenkelement 13.

Im Bereich der besonderen Orte 42 kann beispielsweise ein flächiges Element 43 in Form einer besonderen Blende vorgesehen sein, die nachfolgend näher erläutert wird.

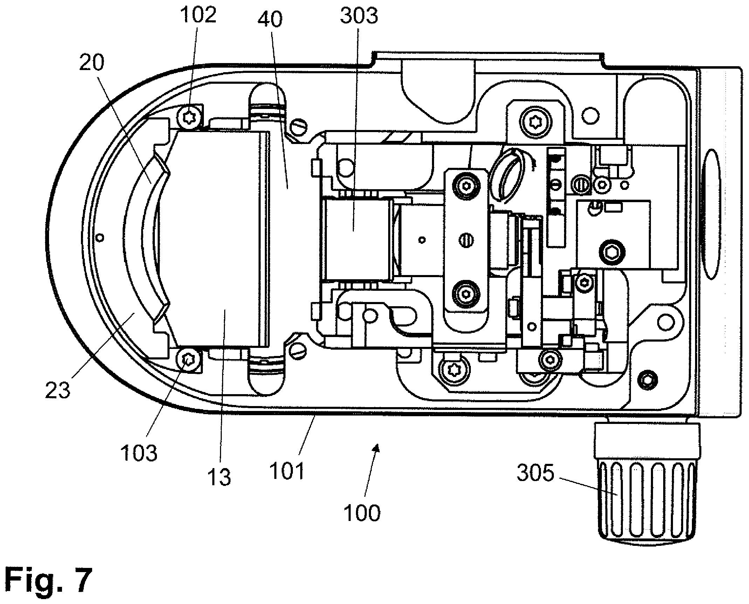

In den Figuren 7 bis 11 sind jeweils Abschnitte einer optischen Beobachtungseinrichtung 100, beispielsweise eines Operationsmikroskops, dargestellt, in denen die erfindungsgemäße Beleuchtungseinrichtung, insbesondere die in Figur 6 dargestellte Beleuchtungseinrichtung, implementiert ist.

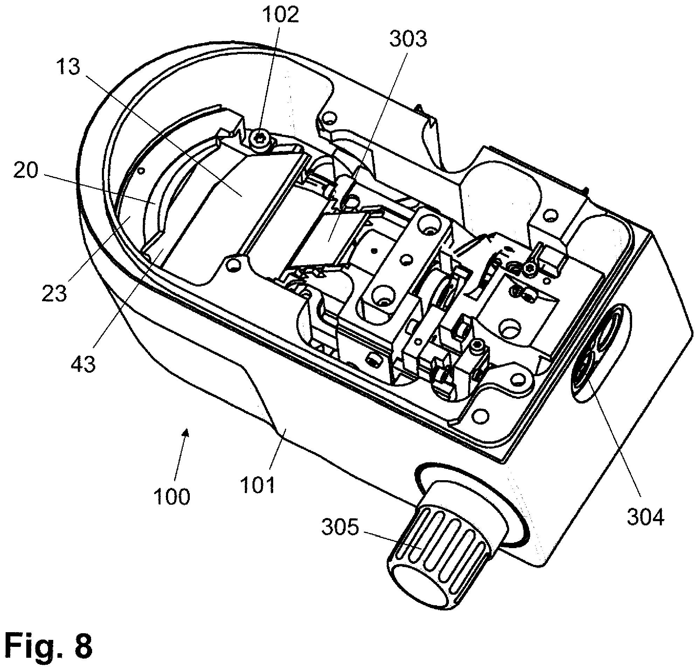

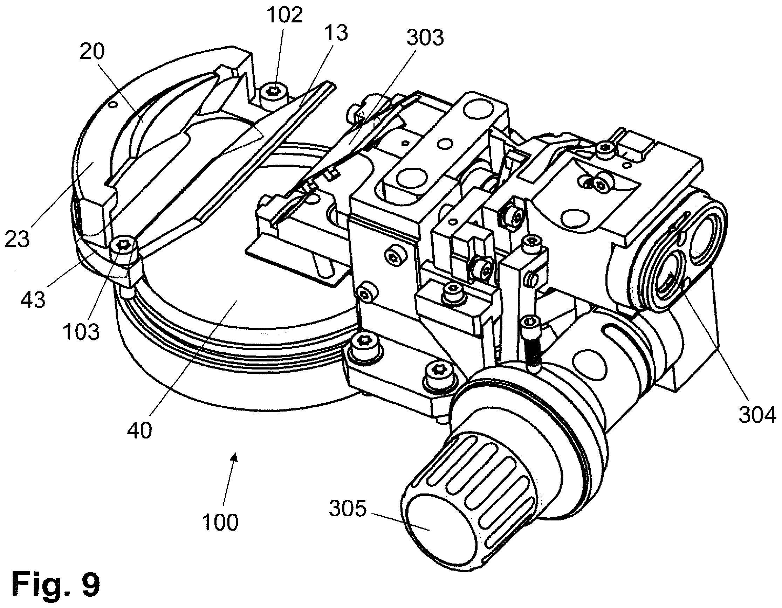

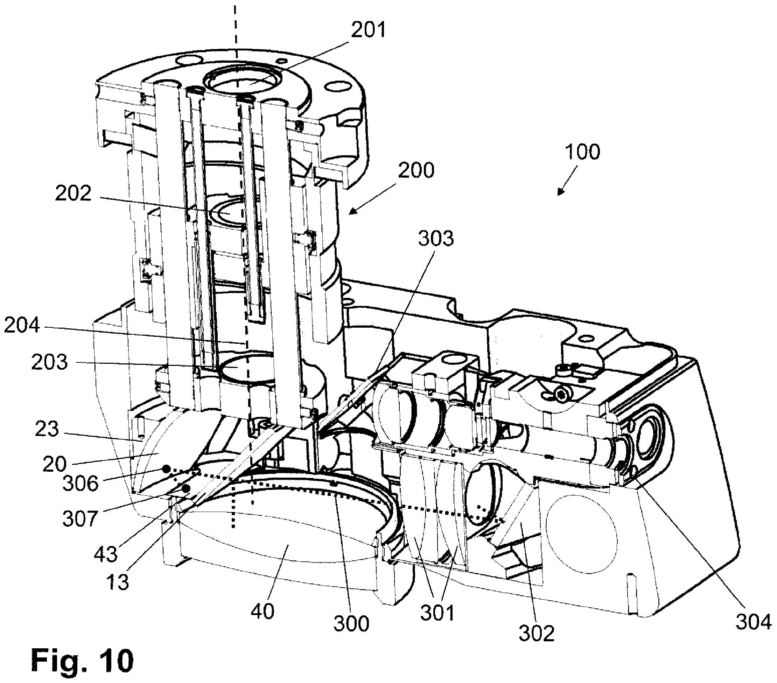

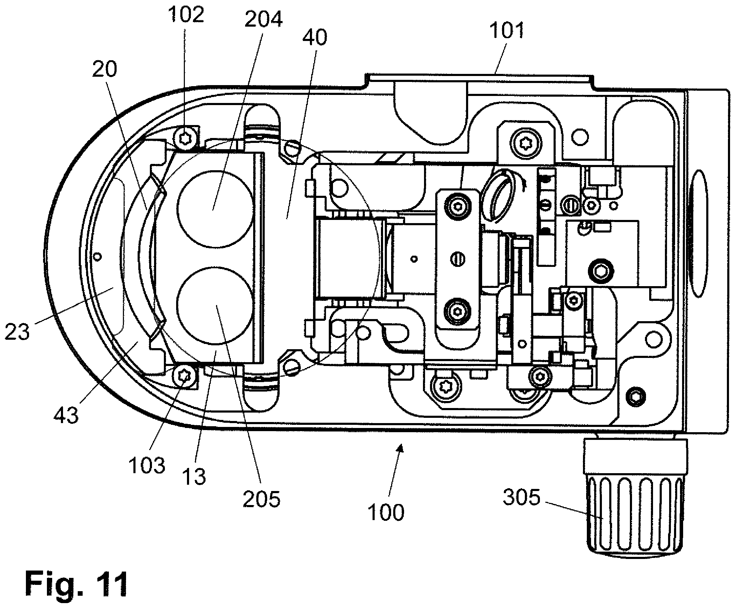

Die Figuren 7 und 8 zeigen einen Abschnitt des Operationsmikroskops 100 mit einem Grundkörper 101, Figur 9 zeigt den entsprechenden Abschnitt ohne Grundkörper. Das Operationsmikroskop 100 enthält ein Beleuchtungssystem, welches einen Beleuchtungsstrahlengang zu einem Umlenkelement 13 bereitstellt, welches das Beleuchtungslicht durch das Objektivelement 40, beispielsweise das Mikroskop -Hauptobjektiv, zum Objektbereich lenkt. Das Umlenkelement 13 wird von dem linken und rechten Beobachtungsstrahlengang 204, 205 des Operationsmikroskops 100 durchsetzt (siehe Figur 10 sowie Figur 11).

Das Beleuchtungslicht, welches von dem Umlenkelement 13 nicht zum Objektbereich gelenkt wird, gelangt zu der Lichtfalle 20. Die Lichtfalle 20 ist in eine Lichtfallenaufnahme 23 eingeklebt und steht mit dieser in gutem thermischem Kontakt. Die Lichtfallenaufnahme 23 ist wiederum über Befestigungsschrauben 102 und 103 fest mit dem Grundkörper 101 des Operationsmikroskops 100 verbunden. Diese Maßnahme bewirkt, dass die Lichtfalle 20 thermisch an den Grundkörper 101 des Operationsmikroskops 100 angekoppelt ist. Die Wärme, welche von dem auf die Lichtfalle 20 auftreffenden Beleuchtungslicht hervorgerufen wird, kann auf diese Weise gut in den Grundkörper 101 des Operationsmikroskops 100 abgeführt werden.

Wie den Figuren 8, 9 10 und 11 zu entnehmen ist, gibt es bei dem vorliegenden Beleuchtungssystem ein flächiges Element 43 in Form einer Metallblende, welche der Lichtfalle 20 zugeordnet ist. Das Beleuchtungslicht, welches durch das Umlenkelement 13 zur Lichtfalle 20 gelangt, wird, soweit es die Lichtfalle 20 nicht absorbiert, zu der Metallblende 43 gelenkt. Die Metallblende 43 deckt das Mikroskop-Hauptobjektiv 40 teilweise ab. Auf diese Weise wird vermieden, dass am Mikroskop-Hauptobjektiv 40 aufgrund von Licht, das von der Lichtfalle 20 reflektiert wird, störende Reflexe auftreten.

Die Form der Oberfläche der Lichtfalle 20, das heißt deren Krümmung, ist so gewählt, das Beleuchtungslicht, das auf die Lichtfalle20 trifft, nur zu der Blende 43 reflektiert wird.

Die Figur 10 zeigt einen Abschnitt des Operationsmikroskops 100 mit einem Pankraten 200, der Linsenelemente 201, 202 und 203 für einen Beobachtungsstrahlengang mit optischer Achse 204 aufweist. Das Beleuchtungssystem stellt einen Beleuchtungsstrahlengang 300 bereit. Das Beleuchtungssystem hat eine Beleuchtungsoptik 301 und umfasst Spiegeleinheiten 302 und 303 (siehe auch Figuren 7 bis 9), die das Licht, welches von einem Lichtleiter, der in eine Lichtleiter-Aufnahmetrennung 304 eingeführt wird, zu dem Umlenkelement 13 lenken. Die Verstellung der Spiegeleinheiten 302, 303 erfolgt über einen Drehknopf 305.

Wie in Figur 10 weiter gezeigt ist, weist die Lichtfalle 20 eine sphärisch gekrümmte Oberfläche auf. Der Beleuchtungsstrahlengang 300 trifft mit seiner optischen Achse an einem Auftreffpunkt 306 auf die Lichteintrittsfläche der Lichtfalle auf und wird von dort zum Teil zurück reflektiert. Die Reflexion erfolgt in einen Fokuspunkt 307 auf der Blende 43. Je steiler die Krümmung der Lichteintrittsfläche der Lichtfalle 20 ist, desto geringer ist der Abstand zwischen dem Fokuspunkt 307 und der Lichtfalle 20. Bei dem Abstand handelt es sich vorteilhaft um den Abstand zwischen dem Fokuspunkt 307 und demjenigen Auftreffpunkt 306, an dem die optische Achse des Beleuchtungsstrahlengangs 300 die Oberfläche der Lichteintrittsfläche der Lichtfalle 20 durchsetzt. Vorteilhaft kann bei einem Krümmungsradius r der Lichtfalle 20 der Abstand zwischen Auftreffpunkt 306 und Fokuspunkt 307 r/2 betragen.

Wie in Figur 10 auch zu sehen ist, ist die Lichtfalle 20 in Bezug auf die optische Achse des Beleuchtungsstrahlengangs 301 in der X/Z-Ebene gekippt. In dem gezeigten Beispiel ist eine Kippung nach unten realisiert. Das bedeutet, dass die Oberflächennormale der Oberfläche der Lichteintrittsfläche der Lichtfalle 20 im Auftreffpunkt 306 in Bezug auf die optische Achse des Beleuchtungsstrahlengangs 300 um einen bestimmten Winkel, im dargestellten Beispiel vorteilhaft um einen Winkel von 30 Grad, nach unten gekippt ist. Eine Kippung in der X/Y-Ebene, das heißt nach links oder rechts, ist grundsätzlich auch möglich, im dargestellten Beispiel jedoch nicht realisiert.

### Bezugszeichenliste

- 10: Einrichtung zum Einkoppeln eines ersten Strahlengangs in einen zweiten Strahlengang
- 11: Erster Strahlengang
- 12: Zweiter Strahlengang
- 13: Umlenkelement
- 14: Falschlicht

- 20: Lichtfalle
- 21: Filterelement (Neutralfilter)
- 22: Lichteintrittsfläche
- 23: Lichtfallen-Aufnahmeeinrichtung

- 30: Beleuchtungseinrichtung
- 31: Einrichtung zum Erzeugen eines Beleuchtungsstrahlengangs
- 32: Optische Elemente
- 33: Optische Elemente
- 34: Beleuchtungsstrahlengang

- 40: Objektivelement
- 41: Beobachtungsstrahlengang
- 42: Ort im Gehäuse der Beobachtungseinrichtung
- 43: Flächiges Element (Blende)

- 100: Operationsmikroskop
- 101: Grundkörper
- 102: Befestigungsschraube
- 103: Befestigungsschraube

- 200: Pankrat
- 201: Linsenelement
- 202: Linsenelement
- 203: Linsenelement
- 204: Beobachtungsstrahlengang
- 205: Beobachtungsstrahlengang

- 300: Beleuchtungsstrahlengang
- 301: Beleuchtungsoptik
- 302: Spiegeleinheit
- 303: Spiegeleinheit
- 304: Lichtleiter-Aufnahmetrennung
- 305: Drehknopf
- 306: Auftreffpunkt
- 307: Fokuspunkt

## Patentansprüche

1. Operationsmikroskop für die Ophthalmochirurgie (100), mit einem Grundkörper (101), und mit einer Beleuchtungseinrichtung (30), welche wenigstens einen Beleuchtungsstrahlengang (34; 300) zu einem Umlenkelement (13) bereitstellt, das das Beleuchtungslicht durch ein Objektivelement (40) zu einer Objektebene lenkt, wobei die Beleuchtungseinrichtung eine Einrichtung (31) zum Erzeugen wenigstens eines Beleuchtungsstrahlengangs (34; 300) und eine Einrichtung (10) zum Einkoppeln wenigstens eines Beleuchtungsstrahlengangs (34; 300) in wenigstens einen Beobachtungsstrahlengang (41; 204, 205) des Operationsmikroskops aufweist, wobei die Einkoppeleinrichtung (10) zum Einkoppeln des Beleuchtungsstrahlengangs in den Beobachtungsstrahlengang ausgebildet ist,
**dadurch gekennzeichnet, dass**
die Einkoppeleinrichtung (10) das Umlenkelement (13) und zur Beseitigung von Falschlicht eine im Bereich des Umlenkelements (13) vorgesehene Lichtfalle (20) für durch das Umlenkelement (13) hindurchtretendes Beleuchtungslicht aufweist und wobei die Lichtfalle (20) ein Filterelement (21), insbesondere ein Neutralfilterelement, aufweist, wobei die Lichteintrittsfläche (22) des Filterelements (21) einen hohlen Radius aufweist, dass der Krümmungsradius der Lichteintrittsfläche (22) im Bereich von 25 mm bis 200 mm, vorzugsweise im Bereich von 45 mm bis 110 mm, liegt, dass das Filterelement (21) zumindest bereichsweise aus einem Absorptionsmaterial besteht oder dass zumindest die Lichteintrittsfläche (22) zumindest bereichsweise mit einem Absorptionsmaterial versehen ist und dass das Filterelement (21) einen hohen Absorptionsgrad von größer oder gleich 80% aufweist

2. Operationsmikroskop nach Anspruch 1, **dadurch gekennzeichnet, dass** die Lichtfalle (20) der Einkoppeleinrichtung (10) der Beleuchtungseinrichtung (30) thermisch am Grundkörper (101) des Operationsmikroskops (100) angekoppelt ist.

3. Operationsmikroskop nach einem der Ansprüche 1 oder 2, **dadurch gekennzeichnet, dass** das Filterelement (21) neben der Lichteintrittsfläche (22) mit hohlem Radius eine zweite Fläche aufweist und dass das Filterelement (21) derart ausgebildet ist, dass Licht, das die Lichteintrittsfläche (22) mit hohlem Radius transmittiert, mit dem hohen Absorptionsgrad absorbiert wird und dass an der zweiten Fläche reflektiertes Licht noch einmal der gleichen Absorption unterliegt.

4. Operationsmikroskop nach einem der Ansprüche 1 bis 3, **dadurch gekennzeichnet, dass** die Lichtfalle (20) an oder in einer Lichtfallen-Aufnahmeeinrichtung (23) angeordnet ist.

5. Operationsmikroskop nach einem der Ansprüche 1 bis 4, **dadurch gekennzeichnet, dass** das Umlenkelement (13) als teildurchlässiger Spiegel oder als Strahlteilerwürfel ausgebildet ist.

6. Operationsmikroskop nach einem der Ansprüche 1 bis 5, **dadurch gekennzeichnet, dass** die Lichtfalle (20) nach dem Umlenkelement (13) angeordnet ist.

7. Operationsmikroskop nach einem der Ansprüche 1 bis 6, **dadurch gekennzeichnet, dass** die Lichtfalle (20) in wenigstens einer Ebene, vorzugsweise in zwei Ebenen, gekippt ist.

8. Operationsmikroskop nach einem der Ansprüche 1 bis 7, **dadurch gekennzeichnet, dass** das Filterelement (21) derart ausgebildet oder angeordnet ist, dass von der Lichteintrittsfläche (22) des Filterelements (21) zurückreflektierte Lichtstrahlen an dem Umlenkelement (13) vorbeilaufen.

9. Operationsmikroskop nach einem der Ansprüche 1 bis 8, **dadurch gekennzeichnet, dass** die Einkoppeleinrichtung ein flächiges Element (43) zum Auffokussieren von von der Lichteintrittsfläche (22) des Filterelements (21) zurückreflektierten Lichtstrahlen aufweist und dass das flächige Element (43) insbesondere als Metallblende ausgebildet ist.

10. Operationsmikroskop nach Anspruch 9, **dadurch gekennzeichnet, dass** bei einem Krümmungsradius r der Lichteintrittsfläche (22) des Filterelements (21) der Abstand zwischen dem Fokuspunkt auf dem flächigen Element (43) und dem Punkt auf der Oberfläche der Lichteintrittsfläche (22) des Filterelements (21), an/in dem das Licht auf die Lichteintrittsfläche (22) des Filterelements (21) auftrifft, r/2 beträgt.

11. Operationsmikroskop nach Anspruch 9 oder 10, **dadurch gekennzeichnet, dass** das flächige Element (43) der Einkoppeleinrichtung (10) im Bereich des Objektivelements (40) des Operationsmikroskops (100) angeordnet ist und dass insbesondere das flächige Element (43) das Objektivelement (40) teilweise abdeckt.

12. Operationsmikroskop nach einem der Ansprüche 1 bis 11, **dadurch gekennzeichnet, dass** diese als Einrichtung (10) zum Einkoppeln eines Beleuchtungsstrahlengangs (34; 300) in einen Beobachtungsstrahlengang (41; 204, 205), insbesondere zum Einkoppeln einer koaxialen Auflichtbeleuchtung in einen Beobachtungsstrahlengang (41; 204, 205), ausgebildet ist.

## Claims

1. Surgical microscope for ophthalmic surgery (100), comprising a main body (101) and comprising an illumination device (30) that provides at least one illumination beam path (34; 300) to a deflection element (13) which guides the illumination light to an object plane through an objective lens element (40), wherein the illumination device comprises a device (31) for producing at least one illumination beam path (34; 300) and a device (10) for coupling at least one illumination beam path (34; 300) into at least one observation beam path (41; 204, 205) of the surgical microscope, wherein the input coupling device (10) is embodied to couple the illumination beam path into the observation beam path,
**characterized in that**
the input coupling device (10) comprises the deflection element (13) and, for removing extraneous light, a light trap (20) provided in the region of the deflection element (13) for illumination light passing through the deflection element (13) and wherein the light trap (20) comprises a filter element (21), more particularly a neutral filter element, wherein the light entry face (22) of the filter element (21) has a hollow radius, **in that** the radius of curvature of the light entry face (22) lies in the range from 25 mm to 200 mm, preferably in the range from 45 mm to 110 mm, **in that** the filter element (21) consists, at least in regions, of an absorption material or **in that** at least the light entry face (22) is provided, at least in regions, with an absorption material and **in that** the filter element (21) has a high absorptivity of greater than or equal to 80%.

2. Surgical microscope according to Claim 1, **characterized in that** the light trap (20) of the input coupling device (10) of the illumination device (30) is thermally coupled to the main body (101) of the surgical microscope (100).

3. Surgical microscope according to either of Claims 1 and 2, **characterized in that** the filter element (21) has a second surface in addition to the light entry face (22) with a hollow radius and **in that** the filter element (21) is embodied in such a way that light transmitted through the light entry face (22) with a hollow radius is absorbed with a high absorptivity and **in that** light reflected at the second surface is once again subject to the same absorption.

4. Surgical microscope according to any one of Claims 1 to 3, **characterized in that** the light trap (20) is arranged at or in a light trap receiving device (23) .

5. Surgical microscope according to any one of Claims 1 to 4, **characterized in that** the deflection element (13) is embodied as a partly transmissive mirror or as a beam splitter cube.

6. Surgical microscope according to any one of Claims 1 to 5, **characterized in that** the light trap (20) is arranged downstream of the deflection element (13) .

7. Surgical microscope according to any one of Claims 1 to 6, **characterized in that** the light trap (20) is tilted in at least one plane, preferably in two planes.

8. Surgical microscope according to any one of Claims 1 to 7, **characterized in that** the filter element (21) is embodied or arranged in such a way that light rays reflected back by the light entry face (22) of the filter element (21) propagate past the deflection element (13).

9. Surgical microscope according to any one of Claims 1 to 8, **characterized in that** the input coupling device comprises an two-dimensional element (43) for focusing light rays thereon that are reflected back by the light entry face (22) of the filter element (21) and **in that** the two-dimensional element (43) is embodied as a metal stop, in particular.

10. Surgical microscope according to Claim 9, **characterized in that**, in the case of a radius of curvature r of the light entry face (22) of the filter element (21), the distance between the focus on the two-dimensional element (43) and the point on the surface of the light entry face (22) of the filter element (21), at/in which the light is incident on the light entry face (22) of the filter element (21), is r/2.

11. Surgical microscope according to Claim 9 or 10, **characterized in that** the two-dimensional element (43) of the input coupling device (10) is arranged in the region of the objective lens element (40) of the surgical microscope (100) and **in that**, in particular, the two-dimensional element (43) partly covers the objective lens element (40).

12. Surgical microscope according to any one of Claims 1 to 11, **characterized in that** it is embodied as a device (10) for coupling an illumination beam path (34; 300) into an observation beam path (41; 204, 205), more particularly for coupling a coaxial reflected light illumination into an observation beam path (41; 204, 205).

## Revendications

1. Microscope opératoire pour la chirurgie ophtalmologique (100), comprenant un corps de base (101) et comprenant un dispositif d'éclairage (30), lequel fournit au moins un trajet de rayon d'éclairage (34 ; 300) vers un élément de déviation (13) qui dévie la lumière d'éclairage à travers un élément d'objectif (40) vers un plan d'objet, le dispositif d'éclairage possédant un dispositif (31) destiné à générer au moins un trajet de rayon d'éclairage (34 ; 300) et un dispositif (10) destiné à injecter au moins un trajet de rayon d'éclairage (34 ; 300) dans au moins un trajet de rayon d'observation (41 ; 204, 205) du microscope opératoire, le dispositif d'injection (10) étant configuré pour injecter le trajet de rayon d'éclairage dans le trajet de rayon d'observation,
**caractérisé en ce que**
le dispositif d'injection (10) possède l'élément de déviation (13) et, pour éliminer la lumière parasite, un piège à lumière (20) situé dans la zone de déviation (13) pour la lumière d'éclairage qui traverse l'élément de déviation (13), et le piège à lumière (20) possédant un élément filtrant (21), notamment un élément filtrant neutre, la surface d'entrée de lumière (22) de l'élément filtrant (21) possédant un rayon creux, **en ce que** le rayon de courbure de la surface d'entrée de lumière (22) se situe dans la plage de 25 mm à 200 mm, de préférence dans la plage de 45 mm à 110 mm, **en ce que** l'élément filtrant (21) se compose au moins dans certaines zones d'un matériau absorbant ou **en ce qu'**au moins la surface d'entrée de lumière (22) est pourvue d'un matériau absorbant au moins dans certaines zones et **en ce que** l'élément filtrant (21) possède un degré d'absorption élevé égal ou supérieur à 80 %.

2. Microscope opératoire selon la revendication 1, **caractérisé en ce que** le piège à lumière (20) du dispositif d'injection (10) du dispositif d'éclairage (30) est couplé thermiquement au corps de base (101) du microscope opératoire (100).

3. Microscope opératoire selon l'une des revendications 1 ou 2, **caractérisé en ce que** l'élément filtrant (21) possède une deuxième surface en plus de la surface d'entrée de lumière (22) à rayon creux, et **en ce que** l'élément filtrant (21) est configuré de telle sorte que la lumière qui est transmise par la surface d'entrée de lumière (22) à rayon creux est absorbée avec le degré d'absorption élevé et **en ce que** la lumière réfléchie au niveau de la deuxième surface est encore une fois soumise à la même absorption.

4. Microscope opératoire selon l'une des revendications 1 à 3, **caractérisé en ce que** le piège à lumière (20) est disposé au niveau de ou dans un dispositif d'accueil de piège à lumière (23).

5. Microscope opératoire selon l'une des revendications 1 à 4, **caractérisé en ce que** l'élément de déviation (13) est réalisé sous la forme d'un miroir partiellement transparent ou sous la forme d'un cube séparateur de faisceaux.

6. Microscope opératoire selon l'une des revendications 1 à 5, **caractérisé en ce que** le piège à lumière (20) est disposé après l'élément de déviation (13) .

7. Microscope opératoire selon l'une des revendications 1 à 6, **caractérisé en ce que** le piège à lumière (20) est incliné dans au moins un plan, de préférence dans deux plans.

8. Microscope opératoire selon l'une des revendications 1 à 7, **caractérisé en ce que** l'élément filtrant (21) est configuré ou disposé de telle sorte que les rayons lumineux réfléchis en arrière par la surface d'entrée de lumière (22) de l'élément filtrant (21) passent au niveau de l'élément de déviation (13).

9. Microscope opératoire selon l'une des revendications 1 à 8, **caractérisé en ce que** le dispositif d'injection possède un élément plat (43) servant à focaliser les rayons lumineux réfléchis en arrière par la surface d'entrée de lumière (22) de l'élément filtrant (21) et **en ce que** l'élément plat (43) est notamment réalisé sous la forme d'un obturateur métallique.

10. Microscope opératoire selon la revendication 9, **caractérisé en ce qu'**avec un rayon de courbure r de la surface d'entrée de lumière (22) de l'élément filtrant (21), l'écart entre le foyer sur l'élément plat (43) et le point sur la surface de la surface d'entrée de lumière (22) de l'élément filtrant (21) au niveau duquel / dans lequel la lumière est incidente sur la surface d'entrée de lumière (22) de l'élément filtrant (21) est égal à r/2.

11. Microscope opératoire selon la revendication 9 ou 10, **caractérisé en ce que** l'élément plat (43) du dispositif d'injection (10) est disposé dans la zone de l'élément d'objectif (40) du microscope opératoire (100) et **en ce que** notamment l'élément plat (43) recouvre en partie l'élément d'objectif (40).

12. Microscope opératoire selon l'une des revendications 1 à 11, **caractérisé en ce que** celui-ci est réalisé sous la forme d'un dispositif (10) destiné à injecter un trajet de rayon d'éclairage (34 ; 300) dans un trajet de rayon d'observation (41 ; 204, 205), notamment à injecter un éclairage par réflexion coaxial dans un trajet de rayon d'observation (41 ; 204, 205).
